# EUROPÄISCHE PATENTSCHRIFT

(11) **EP 3 263 936 B1**
(45) Veröffentlichungstag und Bekanntmachung des Hinweises auf die Patenterteilung: **15.01.2020**
(21) Anmeldenummer: 16176697.7
(22) Anmeldetag: 28.06.2016
(51) Int. Cl.: F16D 1/08, F16D 1/10, F16D 3/06, F16D 65/12, F16D 1/104

(54) **WELLE-NABE-VERBINDUNG**
SHAFT-TO-COLLAR CONNECTION
LIAISON ARBRE-MOYEU

(43) Veröffentlichungstag der Anmeldung: 03.01.2018
(73) Patentinhaber: Kochsiek, Guido, 33818 Leopoldshöhe (DE)
(72) Erfinder: Kochsiek, Guido, 33818 Leopoldshöhe (DE)
(74) Vertreter: Rausch Wanischeck-Bergmann Brinkmann

(56) Entgegenhaltungen:
- EP-A1- 1 225 356
- WO-A1-2012/152442
- WO-A1-2017/108967
- DE-A1-102004 004 456
- DE-A1-102004 056 642
- DE-A1-102009 056 075
- DE-A1-102010 055 379
- DE-U1-202016 102 524
- FR-A1- 2 406 750
- US-A1- 2003 059 233

## Beschreibung

Die vorliegende Erfindung betrifft eine Welle-Nabe-Verbindung mit einer Passverzahnung.

Derartige Welle-Nabe-Verbindungen sind im Stand der Technik vielfältig bekannt und im Einsatz. Eine Passverzahnung ist eine Vielfach-Mitnehmerverbindung. Die Drehmomente werden üblicherweise von den Zahnflanken übertragen. Die Welle ist außen verzahnt, die Nabe innen verzahnt. Mitnehmer stehen außen an der Welle oder innen an der Nabe hervor. Am jeweils gegenüberliegenden Element befinden sich dann entsprechende Ausnehmungen. Zwischen den Mitnehmern befinden sich Zwischenräume, die vom Material des gegenüberliegenden Elementes ausgefüllt werden.

Derartige Passverzahnungen sind bekannt als Evolventen-, Parallel- oder Spitzverzahnung, je nach Bildung und Kontur der Zähne.

Sehr verbreitet sind bei herkömmlichen Welle-Nabe-Verbindungen Passfedersteckverzahnungen, runde Pressverbindungen oder andere Verbindungen mit Zwischenelementen. Durch die Zwischenelemente soll die für die Drehmomentübertragung erforderliche Berührungskontur sichergestellt werden. Weitere im Stand der Technik bekannte Passverbindungen kennen auch Mitnehmer mit polygonalen Außenkonturen, zu denen beispielsweise die sogenannten H- oder P3G-Profile gehören. Insbesondere bei großen Lasten und großen Bauteilen ergeben sich hier erhebliche Nachteile. Die Verbindungen haben einen vollflächigen Formschluss. Die Kraftübertragung findet an jedem Punkt der Konturnormalen, das heißt rechtwinklig zur Oberflächennormalen statt. Idealerweise sollte, insbesondere bei großen Lasten, der Krafteinleitungswinkel tangential zur Bauteilemitte liegen. Dies ist jedoch bei den bekannten Polygonformen nicht der Fall. Darüber hinaus sind Polygonformen für Mitnehmer schwierig beziehungsweise aufwendig in der Herstellung.

Eine Welle-Nabe-Verbindung mit Polygon-Ausformungen der Welle und Nabe, wobei das Polygon eine Hypotrochoide ist oder aus Hypotrochoiden-Abschnitten zusammengesetzt ist, ist z.B. aus DE 10 2004 004 456 A1 bekannt.

Weiterhin ist eine Welle-Nabe-Verbindung mit einer Passverzahnung mit einer Vielzahl von Mitnehmern, wobei die Mitnehmer im Querschnitt eine Kontur aufweisen, die zumindest teilweise entlang einer verlängerten Trochoide verläuft, aus WO 2017/108967 A1 bekannt, wobei dieses Dokument einen Stand der Technik gemäß Art. 54(3) EPÜ darstellt.

Ausgehend vom vorbeschriebenen Stand der Technik liegt der vorliegenden Erfindung die **Aufgabe** zugrunde, eine Welle-Nabe-Verbindung bereitzustellen, welche ohne zusätzliche Übertragungselemente beziehungsweise Zwischenelemente auskommt, eine bessere Lage der Krafteinleitungswinkel gewährleistet und wirtschaftlich in der erforderlichen Qualität und Genauigkeit gefertigt werden kann.

Zur technischen **Lösung** dieser Aufgabe wird eine Welle-Nabe-Verbindung mit den Merkmalen des Patentanspruches 1 vorgeschlagen. Weitere Vorteile und Merkmale ergeben sich aus den Unteransprüchen.

Erfindungsgemäß haben die Mitnehmer im Querschnitt eine Kontur, die zumindest teilweise entlang einer verlängerten Trochoide verläuft.

Die Mitnehmer weisen im Querschnitt eine Kontur, das heißt einen Verlauf der Kontur auf, der somit streckenweise oder teilweise entlang einer verlängerten Trochoide verläuft.

Welle-Nabe-Verbindung im Sinne der vorliegenden Erfindung umfasst jegliche Verbindung zwischen einem innenliegenden und einem außenliegenden Bauteil zum Zwecke der Drehmomentübertragung. Darunter fallen auch scheibenförmige Naben wie beispielswiese allgemeine Kupplungen, Lamellenkupplungen, Bremsscheiben Verbindungen im Bereich der Windkrafttechnik, Verbindung Schiffsschraube/Antriebswelle, ebenso wie sonstige Verbindungsbaugruppen.

Eine Zykloide oder auch zyklische Kurve genannt ist eine Bahn, die ein Kreispunkt beim Abrollen eines Kreises auf einer Leitkurve beschreibt. Die Leitkurve kann beispielsweise eine Gerade sein oder auch wiederum ein Kreis. So entstehen zum Beispiel Hypozykloiden oder Epizykloiden, wie auch Hypotrochoiden oder Epitrochoiden. Die typische Hypozykloide bzw. Hypotrochoide entsteht durch einen Punkt P eines Kreises mit dem Radius R, der ohne zu gleiten auf der Innenseite eines anderen Kreises abrollt. Die typische Epizykloide bzw. Epitrochoide entsteht durch einen Punkt P eines Kreises P, der ohne zu gleiten auf der Außenseite eines anderen Kreises abrollt. Der Abstand a des Punktes P vom Mittelpunktes des Radius R ist von Bedeutung. Wenn der Abstand a ungleich dem Radius R ist spricht man von Trochoiden, andernfalls von einer gewöhnlichen Zykloide. Ist a kleiner als R spricht man von verkürzten Trochoiden. Ist a größer als R spricht man von verlängerten Trochoiden.

Gemäß einem vorteilhaften Vorschlag kann die Verbindung axialverschieblich oder auch verpresst ausgebildet sein, je nach Anwendungsfall. Auch ist es möglich, Mitnehmer anderer Konturierung einzupassen, beispielsweise wenn axial hintereinanderliegend unterschiedliche Welle-Nabe-Verbindungen auszugestalten sind.

Darüber hinaus wird mit besonderem Vorteil angegeben, dass die Verzahnung durch Unrunddrehen hergestellt wird. Dies gilt zumindest für eines der Teile Welle oder Nabe, vorzugsweise aber auch für beide. Hierdurch ergibt sich eine besondere Wirtschaftlichkeit auch bei der Massenproduktion. Ein weiterer Vorteil der vorliegenden Erfindung besteht darin, dass unterschiedliche Materialien kombiniert werden können. Durch die Art der Mitnehmerkontur findet eine optimale Drehmomentübertragung statt, ohne dass zu große Kräfte auf die einzelnen Mitnehmer wirken.

Gemäß einem weiteren vorteilhaften Vorschlag der Erfindung kann der Mitnehmer einen Hinterschnitt aufweisen. Auch sonstige Bereiche, die freigestellt sind, liegen im Rahmen der Erfindung. Freigestellte Bereiche in der Form sind solche, an denen Welle und Nabe keinen Kontakt haben.

Durch die Erfindung wird es ermöglicht, entsprechende Welle-Nabe-Verbindungen ausschließlich durch Drehverfahren herzustellen. Die Kontur entsteht bei der Herstellung mittels Drehverfahren in hoher Präzision mit größtmöglicher Teilung- und Kurvenformgenauigkeit. Teilungsfehler sind praktisch nicht messbar.

Alle Mitnehmer können nach dem selben Bearbeitungsverfahren hergestellt werden. Die Form aller Mitnehmer ist identisch, so dass sich das Vermessen auf einen Mitnehmer reduziert. Durch die mathematisch eindeutig definierte Kontur eignet sich die Erfindung für Großserien und kann mit einer vereinfachten Messtechnik überprüft werden.

Die Kraftübertragungsvektoren zeigen eher in Umfangsrichtung und es ergibt sich eine optimierte Einleitung der Kräfte zur Übertragung von Drehmomenten.

Die Erfindung ermöglicht große Freiheitsgrade bei der Konstruktion und Herstellung von Welle-Nabe-Verbindungen. Die Anzahl der Mitnehmer, der Werkzeugflugkreisradius und die Eindringtiefe in das Werkstück sind Fertigungsparameter, die die Erstellung geeigneter Formen ermöglichen.

Es haben sich in der Praxis bestimmte Fertigungsparameter als geeignet herausgestellt. So ergab sich für die Anzahl der Mitnehmer einen Bereich zwischen 7 und 70 Mitnehmer, wobei 15 bis 40 als typisch angesehen werden können. Die Mitnehmerbreite liegt vorzugsweise > 8 mm, besonders bevorzugt > 12 mm. Hinsichtlich der Mitnehmerhöhe ergab sich als bevorzugt > als 5 mm besonders bevorzugt > als 8 mm. Der Zwischenraum zwischen den Mitnehmern ist bevorzugt > 3 mm, besonders bevorzugt > 5 mm. Diese Angaben zeigen auch, dass das Verhältnis zwischen Mitnehmer und Zwischenraum in Abhängigkeit von Bauraum und Leistungsanforderung nicht zwingend 1:1 sein muss. Es können beispielsweise 2:1, 2,5:1, aber auch umgekehrt 1:2, 1:2,5 sowie jegliche Zwischenverhältnisse geeignet sein.

Ein Hinterschnitt kann vorzugsweise bis zu mehreren Millimetern betragen, sofern einer ausgebildet ist.

In besonders vorteilhafter Weise besitzen die Mitnehmer alle die gleiche Form.

Gemäß einem weiteren vorteilhaften Vorschlag der Erfindung nutzt die Verbindung den axialen Bereich der Überlappung zwischen Welle und Nabe zu weniger als 50% aus.

Die Verbindung lässt sich jeweils für den Einzelfall anpassen und optimieren. Neben der Anzahl der Mitnehmer können deren Breite und Höhe, die Größe der Zwischenräume zwischen den Mitnehmern, innerer und äußerer Funktionsdurchmesser, die Kontaktbereiche zwischen den Mitnehmern von Welle und Nabe der Verbindung sowie der Hinterschnitt variiert werden.

Die Herstellung der Kontur mittels Drehverfahren, insbesondere Unrunddrehverfahren, ergibt sich eine große Fertigungspräzision mit größtmöglicher Teilungs- und KurvenformGenauigkeit. Etwaige Teilungsfehler sind nicht messbar. Es ergibt sich auf diese Weise ein hohes gleichmäßiges Tragbildverhalten. Dies bedeutet, dass industriell reproduzierbar Verbindungen herstellbar sind, bei welchen die Kraftübertragungsflächen optimal sind. Während bei bisherigen entsprechenden Welle-Nabe-Verbindungen erst nach längerer Einlaufzeit ein entsprechend gutes Tragbildverhalten entsteht, ist dies bei der vorliegenden Erfindung praktisch unmittelbar gegeben, was die Leistungsfähigkeit grundsätzlich erhöht.

Die Erfindung ermöglicht die Herstellung von Übermaßverbindungen (Pressverbindungen), so dass unterschiedlichen Ausdehnungen von Welle und Nabe keine Kontaktverluste entstehen. Der Hinterschnitt, bei welchem die Oberflächennormalen vorteilhafterweise nach außen zeigen, sorgt dafür, dass die Verbindung nicht abheben kann. Im Falle der Anwendung von Hinterschnitt bei Schiebesitzverbindungen sorgt dieser bei unterschiedlicher Ausdehnung von Welle und Nabe dafür, dass das maximale Spiel in der Verbindung begrenzt wird.

Um das Fügen einer Welle mit einer Nabe zu erleichtern, können sowohl in Welle als auch in Nabe abgestufte Innen- beziehungsweise Außenkonturen zum Einsatz kommen. Dazu werden mindestens zwei Stufen in Welle und Nabe derart dimensioniert, dass im ersten axialen Bereich der Verbindung ein deutliches Spiel vorhanden ist, was den Fügeprozess stark erleichtert. Bevor die Bauteile in der letzten Stufe in Kontakt kommen, hat sich die Verbindung bereits zentriert. Die beiden Bauteile können mit hohem Übermaß gefügt werden, ohne dass die Rund- oder Planlaufqualität beeinträchtigt wird. Im endmontierten Zustand trägt die gesamte Verbindung mit dem vom Design definierten Übermaß, das heißt, die gesamt axiale Länge der Verbindung wird ausgenutzt. Mit dieser Option lässt sich besonders bei hochbelasteten Verbindungen der Bauraum für die Verbindung optimieren, insbesondere wenn für die Funktionalität der Verbindung ein hohes Übermaß erforderlich ist. Mit Hilfe des abgestuften Designs kann auf Erwärmen oder Tiefkühlen bei der Montage verzichtet werden, was einen erheblichen Vorteil darstellt.

Mit der Erfindung wird eine sehr wirtschaftlich herstellbare Welle-Nabe-Verbindung für die unterschiedlichsten Anwendungsfälle der Drehmomentübertragung bereitgestellt.

Weitere Vorteile und Merkmale der Erfindung ergeben sich aus der folgenden Beschreibung anhand der Figuren. Dabei zeigen:
- Fig. 1: eine Draufsicht auf ein Polygonalprofil einer Welle nach dem Stand der Technik;
- Fig. 2: eine Draufsicht auf ein Polygonalprofil einer Welle nach dem Stand der Technik;
- Fig. 3: eine Schnittansicht (schematisiert) eines Ausführungsbeispiels für ein erfindungsgemäßes Welle-Naben-Profil;
- Fig. 4: eine Darstellung nach Fig. 3 mit der Darstellung der Werkzeugflugbahn;
- Fig. 5: eine vergrößerte Darstellung der Normalen bei einem Ausführungsbeispiel für ein erfindungsgemäßes Welle-Nabe-Profil;
- Fig. 6: eine Darstellung gemäß Fig. 5 für ein Ausführungsbeispiel mit Hinterschnitt;
- Fig. 7a: eine Schnittdarstellung einer erfindungsgemäßen Welle;
- Fig. 7b: eine Schnittdarstellung einer erfindungsgemäßen Nabe und
- Fig. 7c: eine Darstellung des Zusammenbaus.

In den Figuren sind gleiche Elemente mit gleichen Bezugszeichen versehen.

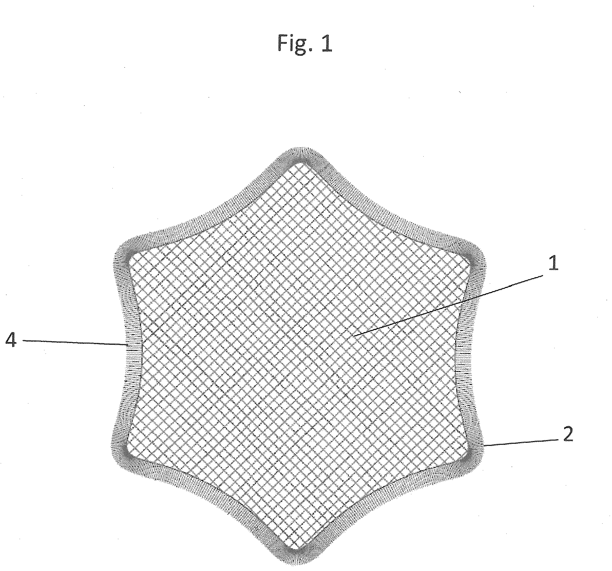

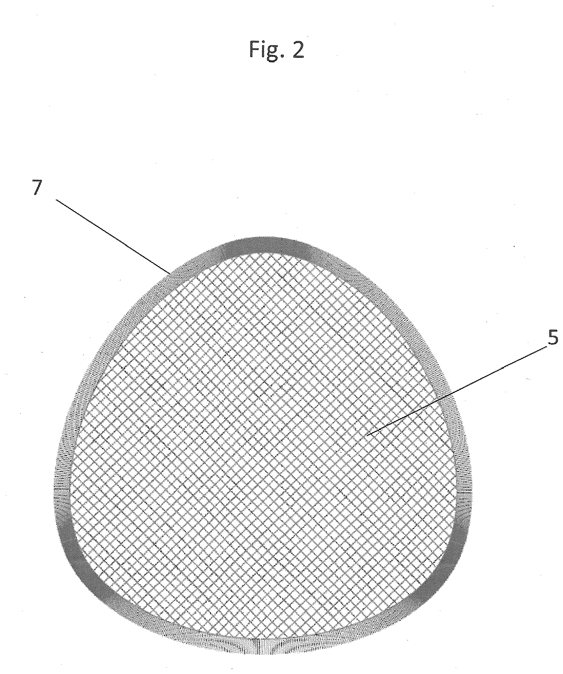

Gemäß Figuren 1 und 2 gibt es, neben den an sich bekannten Standardverzahnungen wie Evolventenverzahnung, Parallelverzahnung oder Spitzverzahnung auch sogenannte polygonale Verzahnungen. Polygonkonturen wie die gezeigten sind im Stand der Technik bekannt. Fig. 1 zeigt beispielhaft ein sogenanntes H6-Profil 1, bei welchem eine Kontur mit sechs Ecken 2 ausgebildet ist. Dieser Querschnitt zur Drehmomentübertragung hat die Oberflächennormale 4.

Gemäß Fig. 2 ist ein sogenannten P3G-Profil gezeigt, bei welchem die Oberflächennormale 7 gebildet ist.

Bei den Figuren 1 und 2 sind die jeweiligen Normalen den gesamten Umfang umlaufend dargestellt. Insbesondere zeigt sich hier der zum Teil für eine Kraftübertragung oder Momentübertragung äußerst ungünstige Verlauf der Normalen.

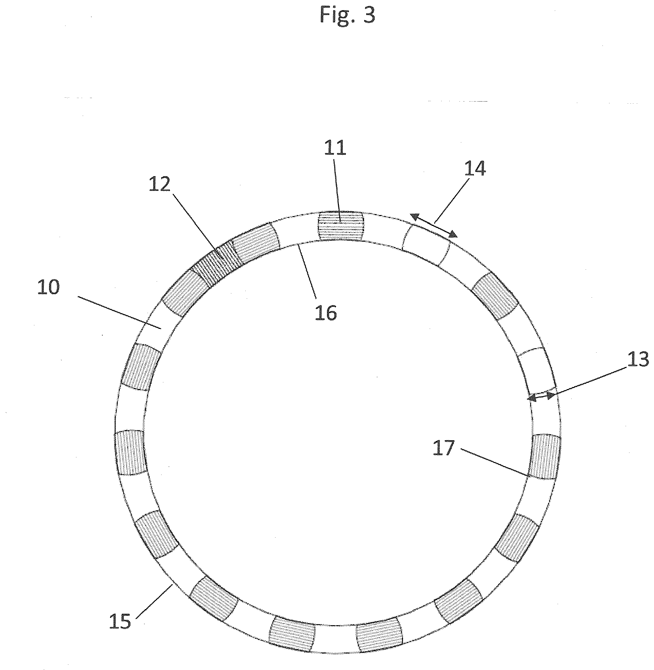

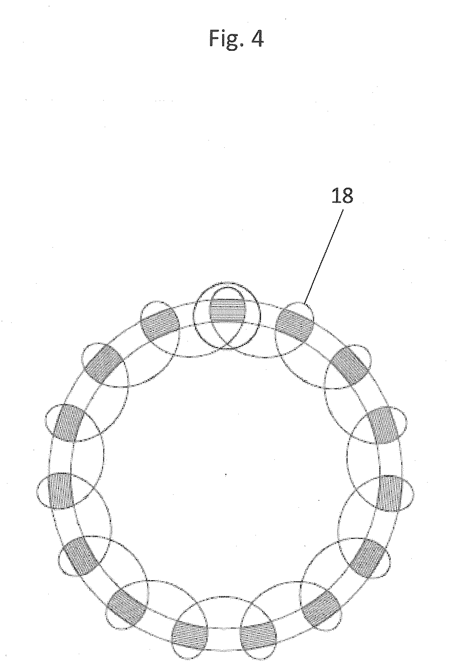

Bei den Figuren 3 und 4 handelt es sich um ein Ausführungsbeispiel für ein erfindungsgemäßes Verzahnungsprofil. Das Profil 10 hat Mitnehmer 11 mit einer Mitnehmerhöhe 13 und Zwischenräume 12, in welcher das entsprechende Gegenprofil eingreift. Die Mitnehmer haben die Mitnehmerbreite 14. Sie liegen zwischen dem inneren Funktionsdurchmesser 16 und dem äußeren Funktionsmesser 15. Im gezeigten Ausführungsbeispiel haben die Mitnehmer einen Hinterschnitt 17, wobei es sich um eine Verjüngung im Bereich der Wurzel handelt. Die Werkzeugflugbahn 18 ist in Figur 4 gezeigt.

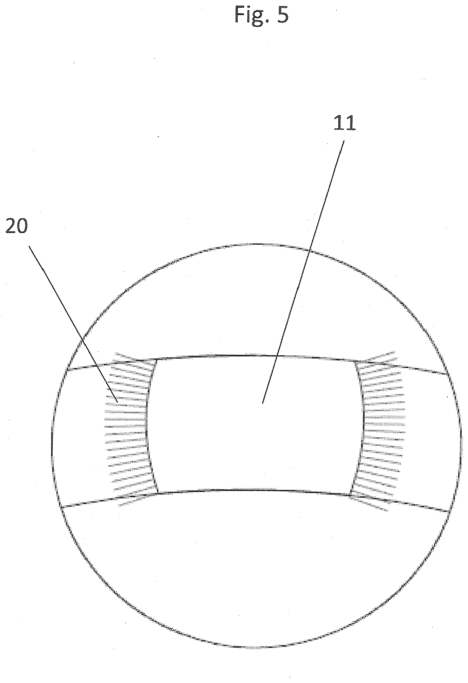

Fig. 5 zeigt eine vergrößerte Darstellung eines Mitnehmers 11 einer Welle-Nabe-Verbindung nach Fig. 3. Der Mitnehmer 11 ist im gezeigten vergrößerten Bild ergänzt durch die Darstellung der Normalen 20, dargestellt durch entsprechende Strahlen auf die Mitnehmeroberfläche. Es zeigt sich, dass hier ein besonders günstiger Normalenverlauf gegeben ist woraus sich eine besondere Eignung für die Übertragung von Kräften und Drehmomenten ergibt.

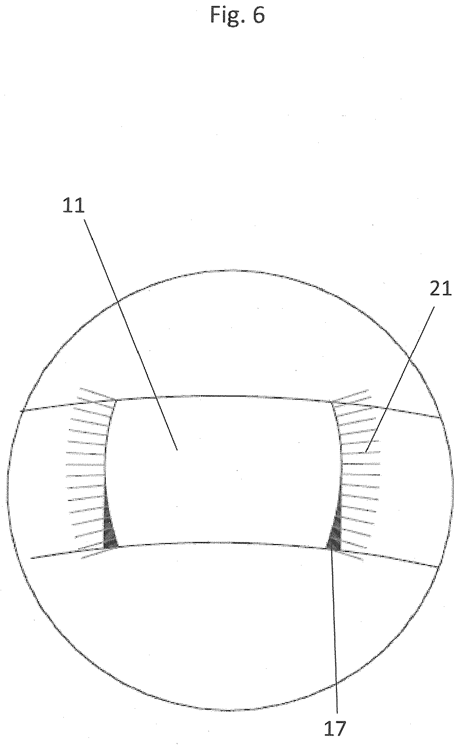

Die in Fig. 6 gezeigte entsprechende Darstellung zeigt einen Mitnehmer 11 sowie die strahlenförmigen Normalen 21. In dieser Darstellung ist der Hinterschnitt 17 besonders markiert. Er ergibt sich aus der Abweichung von einem zumindest geraden oder tangentialen Einlauf des Mitnehmers. Die hinterschnittene Kontur bringt die entsprechend beschriebenen Vorteile mit sich.

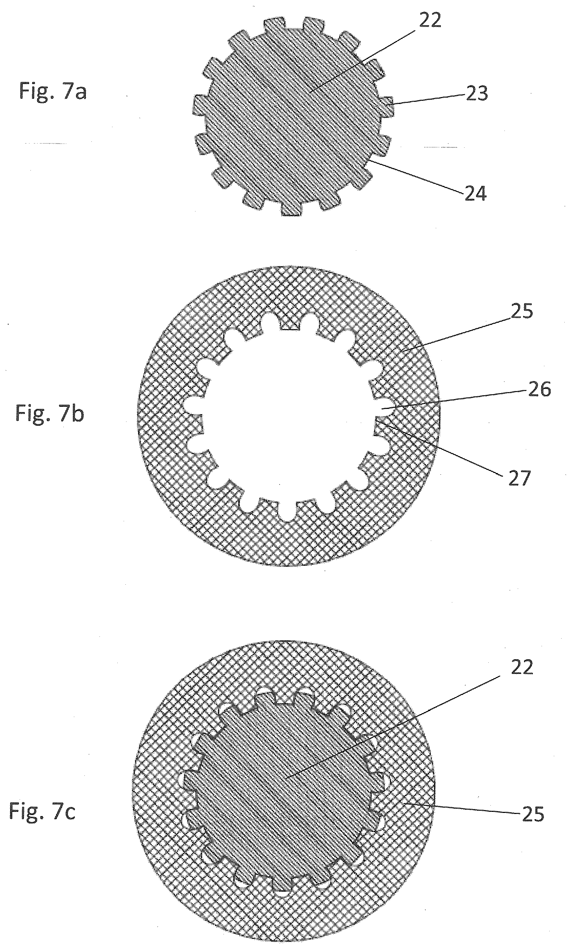

Ein Ausführungsbeispiel ist in den Figuren 7a bis 7c gezeigt. Eine Welle 22 ist mit Mitnehmern 23 versehen, zwischen denen die Zwischenräume 24 verbleiben. Die Mitnehmer 23 haben einen Hinterschnitt im gezeigten Ausführungsbeispiel.

Die in Fig. 7b gezeigte Nabe 25 hat entsprechende Ausnehmungen 26 und Zwischenräume oder Mitnehmer 27.

In der Zusammenfügung ergibt sich das Bild gemäß 7c, wobei sich zeigt, dass die Übertragungskontakte entlang der Normalen optimiert sind.

Das gezeigte Ausführungsbeispiel zeigt beispielsweise einen Reibring einer Bremsscheibe 25 gegenüber einem zentralen Nabenkörper oder Topf 22.

Die beschriebenen Ausführungsbeispiele dienen nur der Erläuterung und sind nicht beschränkend.

### Bezugszeichen

- 1: Polygonprofil
- 2: Ecke
- 4: Normale
- 5: Polygonprofil
- 7: Normale
- 10: Welle-Nabe-Verbindung
- 11: Mitnehmer
- 12: Zwischenraum
- 13: Mitnehmerhöhe
- 14: Mitnehmerbreite
- 15: äußerer Funktionsdurchmesser
- 16: innerer Funktionsdurchmesser
- 17: Hinterschnitt
- 18: Werkzeugflugbahn
- 20: Normale
- 21: Normale
- 22: Welle
- 23: Mitnehmer
- 24: Zwischenraum
- 25: Nabe
- 26: Ausnehmung
- 27: Zwischenbereich

## Patentansprüche

1. Welle-Nabe-Verbindung mit einer Passverzahnung mit einer Vielzahl von Mitnehmern, wobei in der Kontur der Mitnehmer kontaktlose Bereiche ausgebildet sind, **dadurch gekennzeichnet, dass** die Mitnehmer im Querschnitt eine Kontur aufweisen, die zumindest teilweise entlang einer verlängerten Trochoide verläuft.

2. Welle-Nabe-Verbindung nach Anspruch 1, **dadurch gekennzeichnet, dass** die verlängerte Trochoide eine verlängerte Hypotrochoide ist.

3. Welle-Nabe-Verbindung nach Anspruch 1, **dadurch gekennzeichnet, dass** die verlängerte Trochoide eine verlängerte Epitrochoide ist.

4. Welle-Nabe-Verbindung nach wenigstens einem der vorhergehenden Ansprüche, **dadurch gekennzeichnet, dass** auch Mitnehmer mit anderen Konturen vorhanden sind.

5. Welle-Nabe-Verbindung nach Anspruch 4, **dadurch gekennzeichnet, dass** die Mitnehmer mit anderen Konturen zu Evolventen-, Parallel- und/oder Spitzverzahnungen gehören.

6. Welle-Nabe-Verbindung nach einem der vorhergehenden Ansprüche, **dadurch gekennzeichnet, dass** Welle und Nabe relativ zueinander axial verschiebbar sind.

7. Welle-Nabe-Verbindung nach einem der Ansprüche 1 bis 5, **dadurch gekennzeichnet, dass** Welle und Nabe verpresst sind.

8. Welle-Nabe-Verbindung nach einem der vorhergehenden Ansprüche, **dadurch gekennzeichnet, dass** wenigstens eine der Verzahnungen durch Unrunddrehen hergestellt ist.

9. Welle-Nabe-Verbindung nach einem der vorhergehenden Ansprüche, **dadurch gekennzeichnet, dass** die Mitnehmer einen Hinterschnitt aufweisen.

10. Welle-Nabe-Verbindung nach einem der vorhergehenden Ansprüche, **dadurch gekennzeichnet, dass** die Anzahl der Mitnehmer von Welle und Nabe auf der Basis gleicher Grundparameter gebildet sind.

11. Welle-Nabe-Verbindung nach einem der vorhergehenden Ansprüche, **dadurch gekennzeichnet, dass** die Passverzahnung in axialer Richtung abgestufte Bereiche aufweist.

## Claims

1. A shaft-hub connection comprising an alignment gearing having a plurality of dogs, wherein contactless areas are formed in the contour of the dogs, **characterized in that** the dogs comprise a contour in cross section, which runs, at least partially, along a prolonged trochoid.

2. A shaft-hub connection according to claim 1, **characterized in that** the prolonged trochoid is a prolonged hypotrochoid.

3. A shaft-hub connection according to claim 1, **characterized in that** the prolonged trochoid is a prolonged epitrochoid.

4. A shaft-hub connection according to at least one of the preceding claims, **characterized in that** there are also dogs having different contours.

5. A shaft-hub connection according to claim 4, **characterized in that** the dogs having different contours belong to involute gearings, parallel tooth systems and/or fine serrations.

6. A shaft-hub connection according to at least one of the preceding claims, **characterized in that** the shaft and the hub can be axially displaced with respect to each other.

7. A shaft-hub connection according to one of the claims 1 through 5, **characterized in that** the shaft and the hub are pressed together.

8. A shaft-hub connection according to one of the preceding claims, **characterized in that** at least one of the tooth systems is manufactured by means of non-round turning.

9. A shaft-hub connection according to one of the preceding claims, **characterized in that** the dogs comprise an undercut.

10. A shaft-hub connection according to one of the preceding claims, **characterized in that** the numbers of the dogs of the shaft and the hub are defined on the base of same basic parameters.

11. A shaft-hub connection according to one of the preceding claims, **characterized in that** the alignment gearing comprises stepped areas in the axial direction.

## Revendications

1. Liaison arbre-moyeu comprenant une denture à alignement avec une pluralité d'entraîneurs, des zones sans contact étant formées dans le contour des entraîneurs, **caractérisée en ce que** les entraîneurs comprennent une section transversale ayant un contour, qui s'étend au moins partiellement le long d'une trochoïde prolongée.

2. Liaison arbre-moyeu selon la revendication 1, **caractérisée en ce que** la trochoïde prolongée est une hypotrochoïde prolongée.

3. Liaison arbre-moyeu selon la revendication 1, **caractérisée en ce que** la trochoïde prolongée est une épitrochoïde prolongée.

4. Liaison arbre-moyeu selon l'une au moins des revendications précédentes, **caractérisée en ce qu'**il y a aussi des entraîneurs comprenant des contours différents.

5. Liaison arbre-moyeu selon la revendication 4, **caractérisée en ce que** les entraîneurs comprenant des contours différents appartiennent à des dentures à développante, à des dentures parallèles et/ou à des dentures pointues.

6. Liaison arbre-moyeu selon l'une des revendications précédentes, **caractérisée en ce que** l'arbre et le moyeu sont déplaçables axialement l'un par rapport à l'autre.

7. Liaison arbre-moyeu selon l'une des revendications 1 à 5, **caractérisée en ce que** l'arbre et le moyeu sont reliés l'un à l'autre sous haute pression.

8. Liaison arbre-moyeu selon l'une des revendications précédentes, **caractérisée en ce que** l'au moins une des dentures est fabriquée par moyen du tournage en faux-rond.

9. Liaison arbre-moyeu selon l'une des revendications précédentes, **caractérisée en ce que** les entraîneurs comprennent une contre-dépouille.

10. Liaison arbre-moyeu selon l'une des revendications précédentes, **caractérisée en ce que** les nombres des entraîneurs de l'arbre et du moyeu sont formés sur la base de mêmes paramètres de base.

11. Liaison arbre-moyeu selon l'une des revendications précédentes, **caractérisée en ce que** la denture à alignement comprend des parties à gradins dans la direction axiale.
